# EUROPÄISCHE PATENTSCHRIFT

(11) **EP 1 533 546 B1**
(45) Veröffentlichungstag und Bekanntmachung des Hinweises auf die Patenterteilung: **30.08.2006**
(21) Anmeldenummer: 04025484.9
(22) Anmeldetag: 27.10.2004
(51) Int. Cl.: F16H 61/00, F16H 59/66

(54) **Verfahren zur Einstellung eines optimalen Anpressdruckes an den Scheiben eines Variators eines stufenlosen Getriebes**
Method to control an optimal apply pressure for the sheaves of a variator in a continuously variable transmission
Procédé de commande de la pression optimale d'application des poulies d'un variateur

(30) Priorität: 22.11.2003 DE 10354705
(43) Veröffentlichungstag der Anmeldung: 25.05.2005
(73) Patentinhaber: ZF FRIEDRICHSHAFEN AG, 88038 Friedrichshafen (DE)
(72) Erfinder: Bacher, Holger, 88131 Lindau (DE); Beller, Lothar, 88515 Langenenslingen (DE)

(56) Entgegenhaltungen:
- DE-T0- 10 084 277
- US-A- 5 431 602
- PATENT ABSTRACTS OF JAPAN Bd. 2003, Nr. 12, 5. Dezember 2003 (2003-12-05) & JP 2003 269591 A (TOYOTA MOTOR CORP), 25. September 2003 (2003-09-25)
- PATENT ABSTRACTS OF JAPAN Bd. 017, Nr. 088 (M-1370), 22. Februar 1993 (1993-02-22) & JP 04 285361 A (TOYOTA MOTOR CORP), 9. Oktober 1992 (1992-10-09)
- PATENT ABSTRACTS OF JAPAN Bd. 2000, Nr. 26, 1. Juli 2002 (2002-07-01) & JP 2001 254814 A (TOYOTA MOTOR CORP), 21. September 2001 (2001-09-21)

## Beschreibung

Die vorliegende Erfindung betrifft ein Verfahren zur Einstellung eines optimalen Anpressdruckes an den Scheiben eines Variators eines stufenlosen Getriebes, insbesondere eines Umschlingungsgetriebes gemäß dem Oberbegriff des Patentanspruchs 1.

Ein stufenloses Umschlingungsgetriebe besteht üblicherweise u.a. aus einer Anfahreinheit, einer Vorwärts/Rückwärtsfahreinheit; einer Zwischenwelle, einem Differential, aus hydraulischen und elektronischen Steuereinrichtungen sowie aus einem Variator.

Der Variator umfasst nach dem Stand der Technik eine Primär- und eine Sekundärscheibe auch Primär- und Sekundärseite genannt, wobei beide Scheiben aus paarweise angeordneten Kegelscheiben gebildet sind. Des weiteren ist ein Variator mit einem momentenübertragenden Umschlingungselement versehen, das zwischen den beiden Kegelscheibenpaaren umläuft.

In einem derartigen Getriebe wird die aktuelle Übersetzung durch den Laufradius des Umschlingungselementes definiert, der wiederum eine Funktion der axialen Position der Kegelscheiben ist.

Um Kraftstoff zu sparen ist es wichtig, den Grundanpressdruck des Umschlingungselementes an den Scheiben möglichst gering zu halten. Bei geringem Anpressdruck ist das Getriebe nicht mehr gut gegen Momentenstöße von der Abtriebswelle geschützt. Diese Momentstöße können beispielsweise durch Fahrbahnunebenheiten wie Schlaglöcher oder Querrillen sowie durch durchdrehende oder blockierende Räder bedingt sein.

Das gathungsbildende Dokument JP 2003-269591 A offenbart ein Verfahren zur Einstellung eines Anpressdruckes an den Scheiben eines Variators eines stufenlosen Getriebes, bei dem, abhängig von einem ermittelten Fahrbahnzustand, der Anpressdruck erhöht wird.

Der vorliegenden Erfindung liegt die Aufgabe zugrunde, ein Verfahren anzugeben, mittels dessen die Einstellung eines optimalen Anpressdruckes an den Scheiben eines Variators gewährleistet wird, so dass zum einen eine bestmögliche Kraftstoffersparnis und zum anderen eine störungsfreie Funktionsweise unabhängig von Momentenstößen von der Abtriebswelle erzielt wird.

Diese Aufgabe wird durch die Merkmale des Patentanspruchs 1 gelöst. Weitere Ausgestaltungen und Vorteile gehen aus den Unteransprüchen hervor.

Demnach wird vorgeschlagen, zur Einstellung eines optimalen Anpressdruckes an den Scheiben eines Variators, den Fahrbahnzustand zu erkennen, und anhand des erkannten Fahrbahnzustandes den Anpressdruck einzustellen.

Beispielsweise ist durch die erfindungsgemäße Konzeption möglich, den Fahrbahnbelag so zu klassifizieren, dass bei Fahrbahnen, bei denen häufig aufgrund des Fahrbahnzustandes kritischen Ereignisse auftreten, das Druckniveau etwas angehoben wird wodurch eine störungsfreie Funktionsweise und ein besserer Schutz des Variators erreicht werden.

Zur Erkennung des Fahrbahnzustandes wird erfindungsgemäß vorgeschlagen, die Raddrehzahlen zu beobachten, die ohnehin über das CAN zur Verfügung stehen. Hierbei werden die Radgeschwindigkeiten, die auf dem CAN zur Verfügung stehen, für jedes Rad getrennt beobachtet. Desweiteren werden die gemessenen Radgeschwindigkeiten gewichtet gemittelt und von dem Messwert subtrahiert. Dadurch wird ein Signal gewonnen, welches die Abweichung der Radgeschwindigkeit von einer idealisierten Radgeschwindigkeit ausdrückt.

Dieses Signal wird durch eine Mittelwertbildung über eine vorgegebene Anzahl von Werten, vorzugsweise fünf, gemittelt, um die kritischen Ereignisse deutlicher sichtbar zu machen. Das so gewonnene Signal hat einen sehr hohen Rauschanteil, aus dem bei jeder hochfrequenten Änderung der Radgeschwindigkeit ein deutlicher Peak hervorgeht. Diese Peaks können über eine geschwindigkeitsabhängige Schwelle erfasst und weiter ausgewertet werden. Die erfassten Peaks zeigen Ereignisse an den Rädern, die in den meisten Fällen von Fahrbahnunebenheiten herrühren.

Zur Auswertung werden die erkannten Ereignisse gezählt. Dies kann sowohl für jedes Rad einzeln als auch über eine Verknüpfung der Räder erfolgen. Als Verknüpfung kann dabei eine UND- oder ODER-Verknüpfung verwendet werden. Erreicht dieser Zähler eine applizierbare Schwelle, dann wird ein Schlechtweg erkannt. Wird eine applizierbare Zeit lang keine Ereignisse erkannt, so wird der Zähler wieder auf Null zurückgezählt und ein evtl. erkannter Schlechtweg zurückgenommen.

Durch das hier vorgestellte Verfahren ist es mit relativ einfachen Mitteln möglich, Veränderungen, die durch Störung von außen hervorgerufen werden, an den Radgeschwindigkeiten zu erkennen. Dabei ist im Gegensatz zu gängigen Signalanalyse-Verfahren eine geringe Signal-Abtastrate ausreichend. Durch diesen Umstand wird die Auswertung eines Fahrzeug-CAN-Signals erst möglich. Die Erkennung dieser Veränderungen ist in großem Maße unabhängig von Momentenänderungen im Antriebstrang. Fehlerkennungen werden gemäß der Erfindung durch entsprechend lange Filterzeiten, während denen Ereignisse auftreten müssen, weitgehend ausgeschlossen.

Im Rahmen einer besonders vorteilhaften Variante der Erfindung wird vorgeschlagen, die erkannten Ereignisse weiter zu klassifizieren, so dass beispielsweise die Erkennung eines durchdrehenden Rades während einer Kurvenfahrt oder während der Beschleunigungsphase realisiert wird. Zudem kann das einseitige Durchfahren eines schlechten Untergrundes erkannt werden.

Die Erfindung wird im folgenden anhand der beigefügten Figuren beispielhaft näher erläutert. Es stellen dar:
Figur 1: Eine schematische Darstellung der gewichteten Mittelwertbildung der Radgeschwindigkeiten;
Figur 2: Eine schematische Darstellung der Berechnung der Differenz zwischen gemessener und gemittelter Radgeschwindigkeit;
Figur 3: Eine schematische Darstellung der Berechnung des Gradienten der aufsummierten Differenz über fünf Schritte;
Figur 4: Ein Beispiel der Erkennung des Fahrbahnzustandes gemäß der vorliegenden Erfindung; und
Figur 5: Eine schematische Darstellung der Erfassung eines Ereignisses über eine geschwindigkeitsabhängige Schwelle.

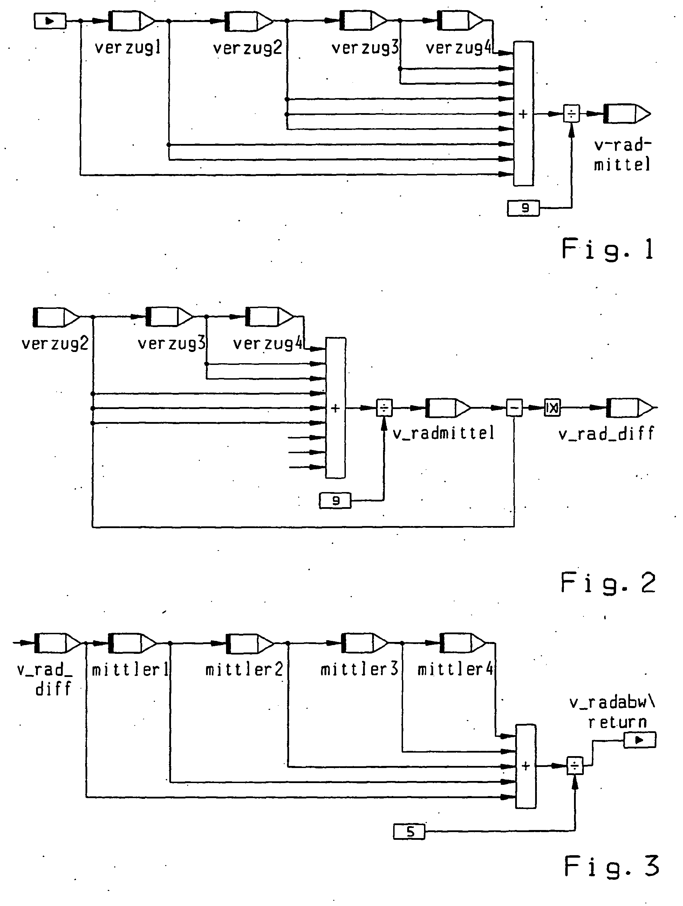

In Figur 1 ist die nach der Erfindung durchgeführte gewichtete Mittelwertbildung der Radsignale über fünf Schritte veranschaulicht. Die Gewichtung ist in diesem Fall 1-2-3-2-1; das gemittelte Signal hat eine Verzögerung von 20 ms.

Diese Verzögerung wird erfindungsgemäß ausgeglichen, da im Weiteren das gemittelte Signal mit dem um 20 ms verzögerten verglichen wird. Somit entsteht eine Verzögerung um 20 ms, was für die geforderte Funktion mehr als ausreichend ist. Hierbei entspricht die Anzahl der Pfeile bei jedem Schritt (calc/in, verzug 1, verzug2, verzug3, verzug4) der Gewichtung; beispielsweise gehen vom dritten Schritt verzug2 drei Pfeile in die Summenbildung ein. Die Mittelung erfolgt in diesem Fall durch Division der Summe durch die Anzahl der Gewichte, nämlich neun, um so den gewichteten Mittelwert der Radgeschwindigkeiten v_radmittel zu erhalten.

Das gemittelte Signal v_radmittel wird von dem gemessenen und um zwei Taskschritte verzögerten Radsignal abgezogen, wobei von der Differenz der Betrag gebildet wird, wodurch die Abweichung der Raddrehzahlen v_rad_diff von dem idealisierten Verlauf gewonnen wird. Dieser Schritt wird in Figur 2 veranschaulicht.

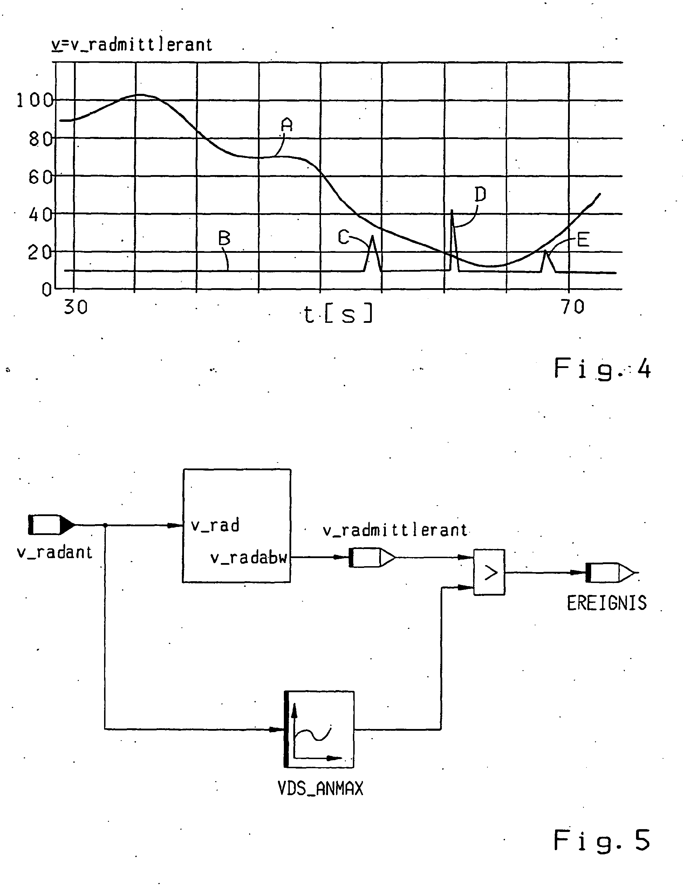

Anschließend werden, wie in Figur 3 gezeigt, die Abweichungen werden über fünf Schritte aufaddiert und durch fünf geteilt (also gemittelt), so dass als Ergebnis die mittlere Steigung der Abweichung v_radabw über diese fünf Schritte gewonnen wird. Die mittlere Steigung der Abweichung v_radabw ist das Maß für die Erkennung von abnormen Ereignissen an den Rädern. Figur 4 zeigt die mittlere Steigung der Abweichung (Kurve A) und die gemittelte Radgeschwindigkeit (Kurve B). Hierbei sind zwei Überfahrten einer Regenrinne (Peaks C und D) sowie ein Durchdrehen der Antriebsräder während der Beschleunigungsphase (Peak E) erkennbar.

Die mittlere Steigung der Abweichung ist geschwindigkeitsabhängig; aus diesem Grunde wird die Erfassungsschwelle in einer Kennlinie über der Radgeschwindigkeit abgelegt. Wird der Kennlinienwert überschritten, dann wird ein Ereignis am Rad detektiert. Dies wird anhand der Figur 5 verdeutlicht, bei der die mittlere Radgeschwindigkeit mit der Kennlinie VDS_ANMAX, welche die Erfassungsschwelle als Funktion der Radgeschwindigkeit v_rad darstellt, verglichen wird.

Gemäß der Erfindung wird für jedes Rad getrennt eine Auswertung durchgeführt. Bei jedem erkannten Ereignis wird, ein Ereigniszähler hochgezählt und die Austrittszeit in einem Timer gesetzt. Wird die Austrittszeit erreicht, weil lange kein Ereignis mehr detektiert wurde, wird der Ereigniszähler zurückgezählt. Der Ereigniszähler ist auf einen Maximalwert, der auch die Erkennungsschwelle für Schlechtweg ist, begrenzt. Wenn der Ereigniszähler den Wert Null erreicht , dann wird "Schlechtweg" wieder weggenommen. Die Schrittweite für das Hochzählen, für das Herunterzählen sowie der Maximalwert sind erfindungsgemäß applizierbare Parameter.

Im Rahmen einer weiteren Variante des erfindungsgemäßen Verfahrens ist vorgesehen, dass die Ereignisse bei jedem Rad durch eine ODER Verknüpfung aufsummiert werden, so dass für alle Räder, ein Ereigniszähler hochgezählt und die Austrittszeit in einem Timer gesetzt wird. Wird die Austrittszeit erreicht, weil lange kein Ereignis mehr detektiert wurde, wird der Ereigniszähler zurückgezählt. Der Ereigniszähler ist auf einen Maximalwert, der auch die Erkennungsschwelle für Schlechtweg ist, begrenzt. Die Schrittweite für das Hochzählen, für das Herunterzählen sowie der Maximalwert sind auch in diesem Fall applizierbare Parameter.

Durch die erfindungsgemäße Erkennung der Fahrbahnunebenheiten mittels des Gradienten der aufsummierten Differenz zwischen der gemessenen Radgeschwindigkeit und dem gewichteten Mittelwert der Radgeschwindigkeit wird ein einfaches und zuverlässiges Verfahren zur Verfügung gestellt, welches eine Anpassung des Anpressdruckes an den Fahrbahnzustand ermöglicht.

## Patentansprüche

1. Verfahren zur Einstellung eines optimalen Anpressdruckes an den Scheiben eines Variators eines stufenlosen Getriebes, wobei zur Einstellung eines optimalen Anpressdruckes der Fahrbahnzustand anhand einer Auswertung von Raddrehzahlen erkannt wird und anhand des erkannten Fahrbahnzustandes der Anpressdruck derart eingestellt wird, dass bei schlechtem Fahrbahnzustand das Druckniveau angehoben wird, **dadurch gekennzeich -** n e t , dass für jedes Rad die gemessenen Radgeschwindigkeiten gewichtet gemittelt und von dem Messwert subtrahiert werden, wodurch ein Signal gewonnen wird, welches die Abweichung der Radgeschwindigkeit von einer idealisierten Radgeschwindigkeit ausdrückt und dass dieses Signal durch eine Mittelwertbildung über eine vorgegebene Anzahl von Werten gemittelt wird, wobei Peaks bei diesem Signal Ereignisse an den Rädern zeigen, die von Fahrbahnunebenheiten herrühren.

2. Verfahren nach Anspruch 1, **dadurch gekennzeichnet, dass** Fahrbahnunebenheiten mittels des Gradienten der aufsummierten Differenz zwischen der gemessenen Radgeschwindigkeit und dem gewichteten Mittelwert der Radgeschwindigkeit erkannt werden.

3. Verfahren nach einem der Ansprüche 1 oder 2, **dadurch** ge - kennzeichnet , dass eine radgeschwindigkeitsabhängige Erfassungsschwelle vorgesehen ist, wobei, wenn diese Schwelle überschritten wird, die Peaks als Fahrbahnunebenheiten erkannt werden.

4. Verfahren nach Anspruch 3, **dadurch gekennzeichnet, dass** die Erfassungsschwelle in einer Kennlinie über der Radgeschwindigkeit abgelegt ist.

5. Verfahren nach einem der vorhergehenden Ansprüche, **dadurch ge -** kennzeichnet , dass bei jedem erkannten Ereignis ein Ereigniszähler hochgezählt wird und die Austrittszeit in einem Timer gesetzt wird, wobei, wenn die Austrittszeit erreicht wird, weil lange kein Ereignis mehr detektiert wurde, der Ereigniszähler zurückgezählt wird und wobei der Ereigniszähler auf einen Maximalwert, der die Erkennungsschwelle für Schlechtweg bildet, begrenzt ist und wobei, wenn der Ereigniszähler den Wert Null erreicht, "Schlechtweg" weggenommen wird.

6. Verfahren nach Anspruch 5, **dadurch gekennzeichnet , dass** die Schrittweite für das Hochzählen, für das Herunterzählen und der Maximalwert applizierbare Parameter sind.

7. Verfahren nach einem der Ansprüche 5 oder 6, **dadurch gekenn - zeichnet** , dass die Ereignisse von jedem Rad durch eine "UND" oder eine ODER" Verknüpfung aufsummiert werden.

8. herfahren nach einem der vorhergehenden Ansprüche, **dadurch gekennzeichnet , dass** die gewichtete Mittelwertbildung der Radsignale über fünf Schritte durchgeführt wird, wobei als Gewichtung 1-2-3-2-1 gewählt wird und dass die Verzögerung beim gemitteltem Signal ausgeglichen wird, indem das gemittelte Signal mit einem entsprechend verzögerten Messsignal verglichen wird.

## Claims

1. A method for setting the optimal pressure on the disks of a variator of a continuously variable transmission, with the road condition being recognized on the basis of evaluated wheel speeds, and with the pressure being set according to the recognized road condition in such a way that poor road conditions will result in the pressure level being raised, **characterized in that** the speeds measured for each wheel are weighted, averaged and subtracted from the measured value, which results in a signal which expresses the deviation of the wheel speed from an idealized wheel speed, and that this signal is averaged by means of a specified number of values, with peaks in this signal indicating events on the wheels which are caused by road irregularities.

2. A method according to claim 1, **characterized in that** road irregularities are recognized by means of the gradient of the totalized difference between the measured wheel speed and the weighted average of the wheel speed.

3. A method according to one of the claims 1 or 2, **characterized in that** a wheel-speed-dependent sensing threshold is provided, with peaks being recognized as road irregularities if this threshold is transgressed.

4. A method according to claim 3, **characterized in that** the sensing threshold is plotted by a characteristic curve above the wheel speed.

5. A method according to one of the preceding claims, **characterized in that** each event recognized is counted by an event counter and the exit time is set in a timer, with the event counter counting down when the exit time is reached because no event has been recorded for a prolonged time, and with the event counter being limited to a maximum value, which constitutes the recognition threshold for rough track, and with "rough track" being cancelled when the event counter reaches the value zero.

6. A method according to claim 5, **characterized in that** the increments for counting up, and for counting down, as well as the maximum value are applicable parameters.

7. A method according to one of the claims 5 or 6, **characterized in that** the events on each wheel are totalized by means of an "AND" or an "OR" operation.

8. A method according to one of the preceding claims, **characterized in that** the weighted averaging of the wheel signals is performed in five steps, with 1-2-3-2-1 being chosen for weighting, and that the delay of the averaged signal is equalized by the averaged signal being compared with a delayed measuring signal.

## Revendications

1. Méthode de réglage d'une pression d'appui optimale sur les poulies d'un variateur d'une transmission à variation continue, sachant que pour le réglage d'une pression d'appui optimale l'état de la chaussée est détecté à l'aide de l'évaluation des vitesses des roues et sachant qu'à l'aide de l'état de chaussée détecté la pression d'appui est réglée de manière à ce que, en cas d'un mauvais état de chaussée le niveau de pression est augmenté, c a r a c t é r i s é e en ce que, pour chaque roue les vitesses des roues mesurées sont moyennées de manière pondérée et soustraites de la valeur mesurée, permettant d'obtenir ainsi un signal qui décrit l'écart de la vitesse de roue par rapport à une vitesse de roue idéalisée et en ce que ce signal est moyenné à l'aide de l'établissement de la moyenne sur un nombre de valeurs prédéfinies, sachant que des crêtes de ce signal représentent des évènements au niveau des roues provenant des irrégularités de la chaussée.

2. Méthode selon la revendication 1, c a r a c t é r i s é e en ce que les irrégularités de la chaussée sont détectées au moyen du gradient de la différence totalisée entre la vitesse de roue mesurée et la valeur moyenne pondérée de la vitesse de roue.

3. Méthode selon une des revendications 1 ou 2, c a r a c t é r i s é e en ce que est prévu un seuil d'acquisition fonction de la vitesse de roue, sachant que, dès que ce seuil est dépassé, les crêtes sont reconnues comme des irrégularités de la chaussée.

4. Méthode selon la revendication 3, c a r a c t é r i s é e en ce que le seuil d'acquisition est contenu dans une courbe caractéristique de la vitesse de roue.

5. Méthode selon une des revendications précédentes, c a r a c t é r i s é e en ce que, à chaque fois qu'un événement est détecté, un compteur d'événements est incrémenté, le temps de sortie étant mis dans un timer, sachant que, dès que le temps de sortie est atteint, parce que pendant une période prolongée aucun événement n'a pas été détecté, le compteur d'événements est décrémenté, et sachant que le compteur d'événements est limité à une valeur maximale représentant le seuil de détection d'une chaussée dégradée et sachant que, dès que le compteur d'événements a atteint la valeur zéro, la « chaussée dégradée » est enlevée.

6. Méthode selon la revendication 5, c a r a c t é r i s é e en ce que le pas d'incrémentation, de décrémentation et la valeur maximale sont des paramètres applicables.

7. Méthode selon une des revendication 5 ou 6, c a r a c t é r i s é e en ce que les événements sont totalisés par chaque roue à l'aide d'une opération ET ou une opération OU.

8. Méthode selon une des revendications précédentes, c a r a c t é r i s é e en ce que l'établissement de la moyenne pondérée des signaux de roue est effectué en cinq étapes, sachant qu'en tant que pondération est choisie la séquence 1-2-3-2-1 et sachant que la temporisation est compensée pour le signal moyenné, en comparant le signal moyenne avec un signal de mesure temporisé.
